Europäisches Patentamt

European Patent Office

Office européen des brevets

(19)

(11) Numéro de publication: **0 173 612**
**A1**

## (12) DEMANDE DE BREVET EUROPEEN

(21) Numéro de dépôt: **85401548.4**

(22) Date de dépôt: **29.07.85**

(51) Int. Cl.⁴: **B 01 D 11/04**, B 01 D 17/06, B 01 F 3/08

(30) Priorité: **02.08.84 FR 8412243**

(43) Date de publication de la demande: **05.03.86**
**Bulletin 86/10**

(84) Etats contractants désignés: **AT BE CH DE GB IT LI NL SE**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(84) Etats contractants désignés: **BE CH DE GB IT LI NL**

(71) Demandeur: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(84) Etats contractants désignés: **AT BE CH DE GB IT LI NL SE**

(72) Inventeur: **Fombarlet, Christine, 5, Place Maréchal Foch, F-42000 Saint Etienne (FR)**
Inventeur: **Guenehec, Michel, 8, Les Cigalous, F-26130 Saint Paul-Trois-Chateaux (FR)**
Inventeur: **Lancelot, Francis, 4, rue de la Convention, F-42100 Saint Etienne (FR)**
Inventeur: **Martin, Laurent, Les Isles - Allée B3, F-07700 Bourg Saint Andeol (FR)**
Inventeur: **Vignet, Paul, Descente des Princes des Baux, F-84100 Orange (FR)**

(74) Mandataire: **Mongrédien, André et al, c/o BREVATOME 25, rue de Ponthieu, F-75008 Paris (FR)**

(54) **Dispositif de mise en contact de deux fluides immiscibles avec application d'un champ électrique.**

(57) Les électrodes (11) utilisées pour créer un champ électrique sont revêtues d'au moins deux couches de matériaux isolants différents, la première couche (22b) en contact avec l'électrode étant constituée d'un matériau liquide isolant, par exemple de benzylnéocaprate ou d'huile de transformateur, et la couche externe (22a) étant constituée d'un matériau solide isolant, par exemple de polytétrafluoroéthylène.

Ces électrodes ont de préférence la forme de barreaux disposés parallèlement au sens de l'écoulement des fluides et elles sont munies de déflecteurs (24) pour empêcher qu'il ne s'établisse un écoulement de la phase dispersée sous la forme de film le long des barreaux.

## Dispositif de mise en contact de deux fluides
## immiscibles avec application d'un champ électrique.

La présente invention a pour objet un dispositif de mise en contact de deux fluides immiscibles, utilisable notamment dans les installations d'extraction liquide-liquide ou de transfert de chaleur par contact direct.

De façon plus précise, elle concerne des dispositifs de ce type dans lesquels on réalise le mélange et/ou la séparation des phases par application d'un champ électrique, la phase continue étant faiblement conductrice de l'électricité.

Dans ces dispositifs, les deux phases immiscibles sont mises en circulation à co-courant ou à contre-courant et l'une des phases se trouve dispersée sous la forme de gouttelettes ou de bulles dans l'autre phase qui constitue la phase continue. Des électrodes réparties de façon appropriée dans le dispositif permettent d'appliquer un champ électrique aux fluides qui y circulent, et de réaliser, selon la valeur du champ appliqué, une coalescence des gouttes ou des bulles de la phase dispersée ou un mélange des fluides en circulation. En effet, lorsque le champ électrique appliqué à la phase continue est suffisamment intense, la pression électrostatique qu'il exerce à la surface des gouttes devient supérieure aux forces de cohésion interfaciales ; les gouttes éclatent et on obtient ainsi une pulvérisation électrostatique. Dans ce cas, le champ permet aussi d'accroître les coefficients de transfert.

En revanche, lorsque le champ électrique est plus faible, il crée des forces d'attraction entre les gouttes ou encore modifie leur mouvement et accroît ainsi leur probabilité de rencontre, ces différents mécanismes accélèrent la coalescence de la phase dispersée.

B 8284.3 MDT

0173612

Le brevet américain 4 161 439 illustre un dispositif de ce type dans lequel un jeu de deux électrodes est disposé avec un espacement variable des électrodes en fonction de la hauteur, de façon à créer alternativement dans la colonne des zones de dispersion et des zones de coalescence des gouttes de la phase dispersée.

Ce dispositif présente toutefois l'inconvénient d'avoir une section importante par rapport à la section utile de passage des phases. La vitesse de circulation et le temps de séjour des phases sont également différents dans les zones de dispersion et de coalescence. De plus, le système d'alimentation électrique ne permet de faire varier que la valeur du champ le long de l'axe de la colonne et non pas ses autres caractéristiques, de même le rapport entre les champs d'un étage à l'autre est fixé par la géométrie des électrodes et ne peut pas varier.

Le brevet anglais 1 205 562 illustre un dispositif du même type dans lequel on utilise également un champ électrostatique pour assurer la dispersion et la séparation des phases en présence.

Lorsque la phase dispersée est une phase aqueuse, qui a une conductivité électrique relativement élevée, les électrodes peuvent être recouvertes d'une couche de matériau isolant, par exemple de polyéthylène, pour éviter tout court-circuit entre les électrodes sur lesquelles sont appliquées des tensions élevées, comme cela est décrit dans l'article de W. Kowalski et Z. Ziolkowski (International Chemical Engineering, vol. 21, n° 2, pp. 323-327).

Cependant, l'emploi d'électrodes de ce type ne permet pas d'éviter complètement à la longue les risques de courts-circuits du fait de claquage de l'isolant lorsque l'on utilise une phase dispersée très conductrice de l'électricité avec un taux de rétention élevé.

La présente invention a précisément pour objet un dispositif de mise en contact de deux fluides immiscibles qui permet d'éviter les inconvénients précités des dispositifs de l'art antérieur.

Le dispositif selon l'invention, de mise en contact à co-courant ou à contre-courant de deux fluides immiscibles, dont l'un constitue une phase continue et l'autre constitue une phase dispersée sous forme de gouttelettes ou de bulles dans la phase continue, comporte au moins une électrode revêtue d'isolant pour réaliser par application d'un champ électrique le mélange et/ou la séparation des deux phases et il se caractérise en ce que le revêtement isolant de ladite électrode est constitué d'au moins deux couches de matériaux différents, la première couche en contact avec l'électrode étant constituée d'un matériau liquide isolant et la couche externe étant constituée d'un matériau solide isolant.

Cette structure particulière du revêtement isolant des électrodes permet d'obtenir une bonne résistance au claquage diélectrique. En effet, lorsque les phases circulent dans le dispositif, il se forme des ponts de phase dispersée, généralement très conductrice, entre les électrodes. Ce phénomène est d'autant plus fréquent que le taux de rétention de la phase dispersée est plus grand. La totalité de la différence de potentiel aux bornes des électrodes se trouve alors appliquée au revêtement isolant, dont la rigidité diélectrique doit être suffisamment élevée et aussi se conserver dans le temps.

Selon l'invention, la réalisation d'une première couche d'isolant liquide est favorable, car elle évite la présence d'un film d'air à l'interface

entre la partie conductrice de l'électrode et l'isolant. De ce fait, on augmente de façon importante la résistance au claquage diélectrique de l'électrode et on peut ainsi opérer avec des taux de rétention de la phase dispersée élevés.

A titre d'exemple, le matériau liquide isolant peut être constitué par du phénylxylyléthane, un polychlorobiphényle, du benzylnéocaprate ou de l'huile de transformateur.

Le matériau solide isolant est avantageusement un polymère organique, par exemple une polyoléfine comme le polyéthylène et le polypropylène, ou de préférence un polymère fluoré tel que le polytétrafluoroéthylène et le polyfluorure de vinylidène.

Ce matériau solide isolant doit être inerte vis-à-vis des phases mises en circulation dans le dispositif.

L'épaisseur totale du revêtement isolant est déterminée en fonction de deux critères qui sont :

1) - la rigidité diélectrique des couches isolantes qui doit être supérieure au champ maximal susceptible d'être appliqué au revêtement en cas de pontage conducteur de deux électrodes.

Ce champ est égal à $\frac{\Delta V}{e}$ si une seule électrode est revêtue ($\Delta V$ représentant la différence de potentiel maximale entre les électrodes), ou $\frac{\Delta V}{2e}$ si les deux électrodes sont revêtues.

2) - la fraction de la chute de tension dans le revêtement qui doit être faible devant celle qui se produit dans la phase continue, afin que le champ électrique dans cette phase ne soit pas diminué. Pour cela l'impédance du revêtement doit être faible devant celle de la phase continue et cette condition peut être formulée de la façon suivante : $RC + \ell > \frac{1}{\omega}$ avec R représentant la résistance

0173612

de la phase continue dans un étage, C la capacité équivalente de revêtement des électrodes, $\mathcal{P}$ le temps de relaxation de la phase continue et $\omega$ la pulsation de la différence de potentiel entre les électrodes.

Généralement l'épaisseur totale du revêtement isolant est de 0,1 à 5 mm et l'épaisseur de la couche de matériau solide isolant est généralement supérieure à l'épaisseur de la couche du matériau liquide isolant.

A titre d'exemple, l'épaisseur de la couche de matériau solide isolant peut être de 0,5 à 1 mm tandis que l'épaisseur de la couche de matériau liquide isolant est de 0,2 à 0,5 mm.

Les électrodes peuvent être réalisées en n'importe quel matériau conducteur de l'électricité, par exemple en métal ou alliage, en graphite, en polymère conducteur de l'électricité ou en conducteur organique.

Pour la réalisation de l'électrode revêtue de matériau isolant, on peut procéder de la façon suivante :

Dans un tube obstrué préalablement à une extrémité et qui constituera la couche externe de matériau solide isolant, on engage un fil conducteur, par exemple en métal ou en graphite qui constituera l'électrode proprement dite, de diamètre un peu inférieur au diamètre intérieur du tube. On introduit ensuite dans l'espace compris entre le tube et le fil un matériau liquide isolant, par exemple de l'huile de transformateur ou du benzylnéocaprate. De préférence, on réalise cette opération dans une enceinte à vide afin d'éviter que le liquide n'emprisonne des bulles d'air susceptibles de favoriser un percement ultérieur de l'isolant. Il est par ailleurs utile de dégazer et

0173612

déshydrater auparavant le liquide et d'effectuer de plus un polissage du fil conducteur.

Les électrodes utilisées dans le dispositif de l'invention peuvent avoir des formes variées et être réalisées par exemple sous la forme de grilles, de motifs disposés transversalement à l'écoulement des fluides, par exemple la forme d'anneaux, de spirales, de sinusoïdes, etc...

Selon une disposition préférée de l'invention, les électrodes ont la forme de barreaux disposés parallèlement au sens de l'écoulement des fluides, et ces barreaux sont munis de déflecteurs empêchant qu'il ne s'établisse un écoulement de la phase dispersée sous la forme de film le long desdits barreaux.

Ces déflecteurs peuvent être constitués par des couronnes disposées sur lesdits barreaux, et ils sont réalisés de préférence en un matériau faiblement mouillable par la phase dispersée.

La présence de ces déflecteurs permet d'arrêter et de redistribuer vers le centre de l'espace inter-électrodes la phase dispersée qui peut s'écouler sous forme de film le long des barreaux. Sans ces déflecteurs, ce phénomène de ruissellement qui est d'autant plus important que le débit de la phase dispersée est plus grand, diminue l'efficacité du contacteur, car le transfert de matière entre la phase continue et la phase dispersée qui s'écoule le long des barreaux est faible. Les déflecteurs peuvent être réalisés en matériau quelconque, isolant ou non, mais de préférence faiblement mouillable par la phase dispersée, par exemple en polytétrafluoroéthylène.

Ces déflecteurs peuvent également avoir des formes variées afin de jouer simultanément le rôle de garnissage favorisant le contact entre les deux phases ; ainsi, ils peuvent être constitués par des cou-

B 8284.3 MDT

ronnes perforées, planes ou non.

De préférence, ces déflecteurs sont en contact avec la paroi du dispositif pour éviter qu'il ne puisse se produire un ruissellement de la phase dispersée sur les parois du dispositif.

Par ailleurs, les déflecteurs sont généralement décalés les uns par rapport aux autres sur deux électrodes se faisant face afin d'éviter que les jets de phase dispersée redistribués vers le centre de l'espace inter-électrode ne puissent se rencontrer et aient la possibilité de coalescer.

Selon un mode de réalisation préféré du dispositif de l'invention, celui-ci comprend une pluralité d'électrodes disposées parallèlement au sens de l'écoulement des fluides, ces électrodes déterminant dans la colonne plusieurs étages et étant susceptibles d'être portées à des potentiels différents de façon que le champ électrique puisse varier dans les différents étages de la colonne. Ainsi, on peut former successivement dans la colonne des étages fonctionnant en disperseur et des étages fonctionnant en coalesceur.

Dans les étages coalesceurs, la tension appliquée aux électrodes est inférieure à la valeur critique afin de provoquer la coalescence des gouttes introduites dans la colonne.

En revanche, dans les étages disperseurs, la tension appliquée aux électrodes est supérieure à la valeur critique afin que le champ soit assez grand pour entraîner la rupture des gouttes et qu'il s'établisse ainsi un lit de phase dispersée dont le taux de rétention est d'autant plus grand et le diamètre des gouttes plus petit que la différence de potentiel est plus grande.

Selon une disposition avantageuse de l'invention, lorsque le dispositif est conçu pour la mise

0173612

en contact à contre-courant, des deux fluides, ce dispositif comprend de plus un électrocoalesceur placé dans la partie du dispositif située entre l'entrée de la phase dispersée et la sortie de la phase continue.

Cet électrocoalesceur peut comporter au moins deux électrodes dont l'une placée au voisinage de l'entrée de la phase dispersée est reliée à la terre tandis que l'autre est sous tension. La présence d'un électrocoalesceur de ce type de conception simple et d'une grande efficacité permet d'arrêter l'entraînement des fines gouttelettes de la phase dispersée et d'assurer ainsi son recyclage dans le dispositif. Le champ électrique engendré par l'électrocoalesceur permet d'arrêter l'ensemble des fines gouttelettes grâce au contre-courant des phases et à leur circulation par rapport aux électrodes. Cela se traduit au voisinage d'une électrode de l'électrocoalesceur par une zone de rétention élevée (par exemple 80%) qui se comporte comme un milieu poreux ; les gouttes de la phase dispersée qui ont grossi sous l'action du champ électrique piègent les fines gouttelettes qui pourraient être entraînées par la phase continue. La dimension des gouttes continue donc à croître au coeur de cette zone jusqu'à ce que leur taille leur permette de se déplacer à nouveau à contre-courant de la phase continue et de rejoindre ainsi la partie active du dispositif.

De ce fait, on peut faire fonctionner le dispositif très près de l'engorgement sans entraînement important de la phase dispersée. Cela permet d'augmenter le taux moyen de rétention ainsi que les débits des deux phases.

Selon une réalisation préférée de l'électrocoalesceur, celui-ci comporte deux électrodes reliées à la terre entourant une électrode sous tension.

B 8284.3 MDT

Selon une autre disposition avantageuse de l'invention, lorsque le dispositif est conçu pour la mise en contact à contre courant de deux fluides immiscibles, celui-ci comprend des moyens pour créer un champ électrique dans le décanteur de la phase dispersée afin d'accélérer la coalescence des gouttes à l'interface entre les deux phases dans ledit décanteur.

Le dispositif de l'invention peut encore comporter un garnissage pour favoriser le mélange des phases qui peut être constitué par exemple par des anneaux Raschig ou des billes. On peut aussi utiliser des plateaux perforés ou des chicanes.

Le dispositif de l'invention s'applique en particulier au traitement de phases dont la phase continue est faiblement conductrice de l'électricité. Il peut être utilisé pour des opérations d'extraction dans les industries nucléaires, hydrométallurgiques, pétrolières, pétrochimiques, alimentaires et pharmaceutiques.

D'autres caractéristiques et avantages de l'invention apparaîtront mieux à la lecture de la description qui suit donnée bien entendu à titre illustratif et non limitatif en référence au dessin annexé sur lequel :

- la figure 1 représente schématiquement en coupe verticale un dispositif selon l'invention,

- la figure 2 est une vue agrandie de l'un des étages du dispositif de la figure 1,

- la figure 3 représente d'autres modes d'agencement des électrodes du dispositif de l'invention,

- la figure 4 est un diagramme représentant les variations de la hauteur d'unité de transfert (HUT) dans le dispositif en fonction du potentiel appliqué aux électrodes, et

B 8284.3 MDT

0173612

- la figure 5 est un diagramme représentant les variations de la concentration du soluté dans la phase dispersée en fonction de la hauteur de la colonne dans différents modes de fonctionnement du dispositif.

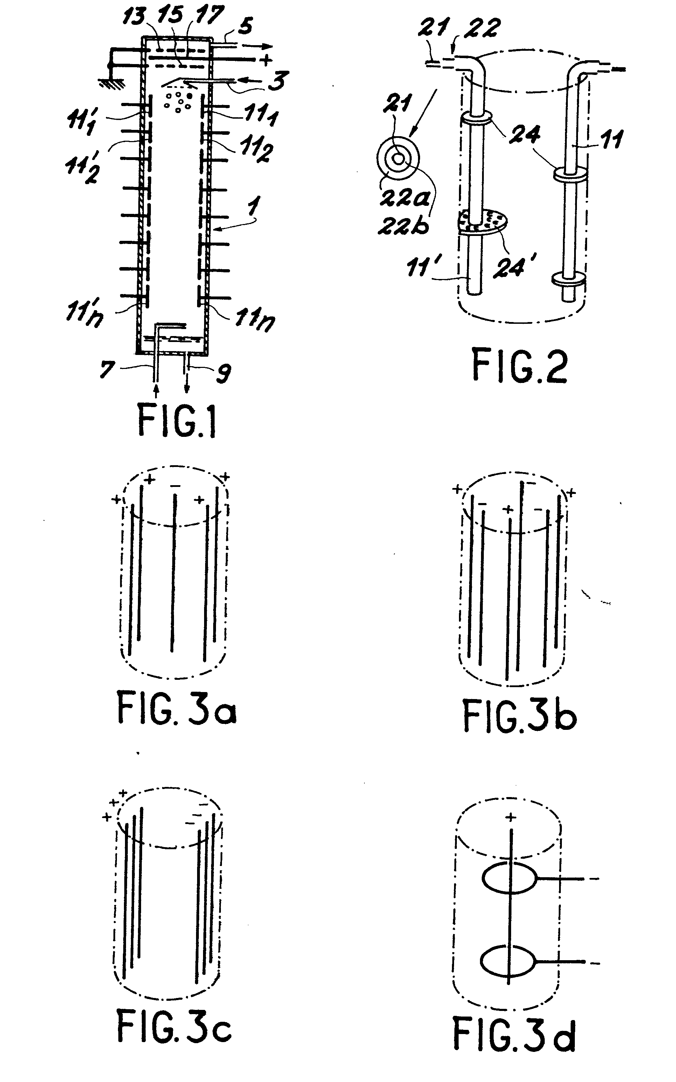

Sur la figure 1, on voit que le dispositif est constitué par une colonne 1 de forme cylindrique comportant à sa partie supérieure une entrée 3 pour la phase lourde et une sortie 5 pour la phase légère et à sa partie inférieure une entrée 7 pour la phase légère et une sortie 9 pour la phase lourde. Les parties supérieure et inférieure de la colonne constituent ainsi les décanteurs haut et bas et ils peuvent avoir une section supérieure à celle de la zone centrale active de la colonne 1. La colonne peut être réalisée en matériau quelconque, par exemple en matériau conducteur de l'électricité, en matériau conducteur de l'électricité revêtu d'isolant ou en matériau isolant comme le verre. De préférence, on réalise la colonne en un matériau faiblement mouillé par la phase dispersée.

Dans la partie centrale de la colonne qui constitue la zone active, sont disposés des groupes d'électrodes $11_1$-$11'_1$, $11_2$-$11'_2$,..., $11_n$-$11'_n$ qui délimitent ainsi dans la colonne n étages. Les électrodes $11_1$ et $11'_1$ sont reliées respectivement aux pôles d'un générateur de tension et elles sont maintenues dans la colonne par des torions qui permettent de réaliser leur connexion à ce générateur de tension.

On peut aussi relier certaines électrodes, par exemple les électrodes $11'_1$, $11'_2$,..., $11'_n$ à la terre et les autres électrodes à un générateur électrique. Dans ce cas, il n'est pas nécessaire de revêtir d'isolant les électrodes reliées à la terre.

La colonne peut comprendre de plus un garnissage supplémentaire autre que les électrodes, par

exemple des anneaux de Raschig ou des billes, qui ne sont pas représentés sur le dessin.

Lorsque la phase dispersée est constituée par la phase lourde, la partie inférieure de la colonne constitue un décanteur et l'on relie à la terre la phase dispersée décantée. Ainsi, le niveau de l'interface ou bien le niveau de la tension de l'étage le plus bas sont réglés de façon que le champ créé entre la phase décantée et cet étage accélère la coalescence des gouttes à l'interface et empêche le développement d'un lit de phase dispersée. Ces dispositions permettent de réduire les dimensions du décanteur bas et donc de diminuer le volume de phase immobilisée.

Sur la figure 2, on a représenté plus en détail la paire d'électrodes $11_1$-$11_1'$ constituant le premier étage du dispositif. Sur cette figure, on voit que les électrodes 11 et 11' ont la forme de barreaux cylindriques et qu'elles comportent une âme conductrice 21 constituée par exemple par un fil métallique, recouverte d'un isolant 22, cet isolant 22 comportant une couche externe 22a en matériau isolant solide et une couche intermédiaire 22b en matériau isolant liquide. Pour empêcher l'écoulement d'un film de phase dispersée sur les barreaux cylindriques constituant les électrodes, celles-ci sont munies de déflecteurs 24 qui ont la forme de couronnes montées sur les électrodes 11 et 11'. Comme on peut le voir sur le dessin, les déflecteurs 24 de l'électrode 11' sont décalés dans le sens de la hauteur par rapport aux déflecteurs 24 de l'électrode 11. Ces déflecteurs sont réalisés en un matériau faiblement mouillé par la phase dispersée, par exemple en polytétrafluoréthylène, et ils sont en contact avec les parois de la colonne. Ces déflecteurs sont maintenus sur les électrodes 11 et 11' par tout moyen approprié. Ils peuvent, par exemple, être enga-

B 8284.3 MDT

gés en force sur ces électrodes.

Sur la figure 2, on a représenté en 24' un autre mode de réalisation des déflecteurs 24, dans lequel ceux-ci présentent un rayon extérieur plus important sur leur partie située à l'intérieur de la colonne, afin de jouer également le rôle de garnissage. Dans ce cas, les déflecteurs peuvent être munis de perforations.

Bien que sur la figure 2, les électrodes d'un étage soient constituées par une paire de barreaux disposés parallèlement au sens de l'écoulement des fluides dans la colonne, on peut utiliser d'autres modes d'agencement des électrodes, par exemple associer dans chaque étage une pluralité de barreaux entre lesquels est entretenue une différence de potentiel.

A titre d'exemple, on a représenté sur les figures 3a, 3b et 3c, différents modes d'agencement des électrodes dans un étage.

On peut aussi associer dans un étage une électrode disposée parallèlement au sens de l'écoulement des fluides à des électrodes disposées perpendiculairement au sens de l'écoulement des fluides comme cela est indiqué sur la figure 3d où une électrode centrale est reliée à un pôle du générateur de tension et associée à deux électrodes transversales ayant la forme d'anneaux reliés au deuxième pôle.

Dans ces différents modes d'agencement des figures 3a, 3b, 3c et 3d, les électrodes portées à un même potentiel peuvent être reliées à la terre au lieu d'être reliées au pôle d'un générateur électrique.

Dans la partie supérieure de la colonne 1, on a disposé un électrocoalesceur comportant trois électrodes 13, 15, 17 qui sont disposées entre l'entrée 3 de la phase dispersée et la sortie 5 de la phase continue. Ces électrodes sont constituées par des

B 8284.3 MDT

0173612

plaques de graphite perforées, les plaques 13 et 15 étant reliées à la terre et la plaque 17 étant reliée à une source de tension.

Dans le mode de réalisation illustré sur la figure 1, la partie centrale de la colonne est munie de huit étages identiques constitués chacun par une paire d'électrodes telles que 11-11'. Lors du fonctionnement du dispositif, on peut relier chaque paire d'électrodes à une source de tension et lui appliquer un potentiel approprié de façon à faire fonctionner chaque étage en étage disperseur ou en étage coalesceur.

En effet, comme on l'a vu précédemment, on peut obtenir deux domaines de fonctionnement suivant la valeur de la tension appliquée à chaque étage.

A titre d'exemple, lorsque l'on utilise pour la mise en contact d'une phase dispersée constituée par une solution aqueuse acide contenant en solution du phosphate de tributyle, et d'une phase continue constituée par un hydrocarbure aromatique tel qu'une coupe pétrolière commercialisée sous la marque Solvesso 150, une colonne dont les étages présentent les caractéristiques suivantes :
- hauteur des électrodes : L=100 mm,
- espace entre les électrodes : D=25,5 mm,
- diamètre de la partie conductrice des électrodes : $d_1$=2 mm,
- diamètre externe des électrodes : $d_2$=6 mm,
- diamètre interne des déflecteurs : $D_1$=6 mm,
- diamètre externe des déflecteurs : $D_2$=13 mm,
la valeur critique délimitant ces deux domaines de fonctionnement se situe à 5 kV pour une tension sinusoïdale de fréquence 50 Hz.

Ainsi, lorsque la tension appliquée est inférieure à 5 kV, le champ électrique provoque la coa-

lescence des gouttes de phase dispersée introduite dans la colonne.

Lorsque la tension appliquée est supérieure à 5 kV, le champ est assez grand pour entraîner la rupture des gouttes, il s'établit alors dans la colonne un lit de phase dispersée, à débit de phase fixé, le taux de rétention est d'autant plus grand et le diamètre des gouttes plus petit que la tension est grande. La hauteur d'unité de transfert dans le dispositif (HUT) qui est définie par la formule : $\dfrac{H}{\ln (1-E)}$ dans laquelle H représente la hauteur totale de l'étage et E l'efficacité de MURPHREE, augmente dans les zones de coalescence et décroît au contraire dans les zones de dispersion dans des proportions importantes par rapport au fonctionnement sans champ, sous le double effet de la diminution de la taille des gouttes et de l'accroissement du coefficient global de transfert par le champ.

On peut ainsi commander de manière continue et à tout instant par l'intermédiaire d'un simple paramètre électrique : la différence de potentiel entre deux électrodes, le flux de transfert dans le contacteur.

Par ailleurs, l'isolation des électrodes permet la bonne marche de la colonne pour tous les débits spécifiques de phase dispersée, c'est-à-dire pour toutes les rétentions. La géométrie des électrodes permet également de conserver une faible hauteur d'unité de transfert (HUT) jusqu'à des débits spécifiques de phase dispersée élevés, par exemple de l'ordre de 1,5 l/hcm$^2$.

De plus, en jouant sur les caractéristiques de la différence de potentiel aux bornes de chaque étage, (par exemple sur l'amplitude et la fréquence dans le cas d'une tension alternative, ou sur la

durée, la hauteur et la fréquence des impulsions dans le cas d'une tension pulsée) on peut faire varier les caractéristiques correspondantes du champ électrique et obtenir ainsi tel ou tel effet sur le système diphasique, par exemple rupture des gouttes, coalescence, accroissement des coefficients de transfert.

Deux exemples de fonctionnement sont donnés ci-après pour illustrer l'effet de la tension appliquée (tension alternative de 50 hz) aux électrodes du dispositif de l'invention.

Dans le premier exemple de fonctionnement, on porte tous les étages du dispositif au même potentiel et on détermine la hauteur d'unité de transfert dans l'appareil (HUT) en fonction du potentiel appliqué.

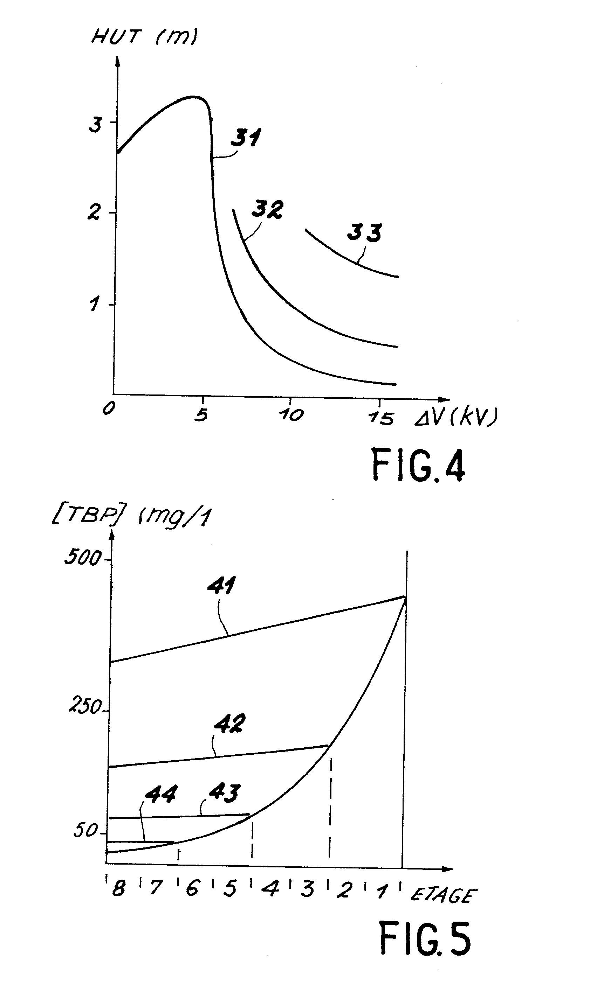

Les résultats obtenus sont donnés sur la figure 4 qui représente les variations de la HUT (en m) en fonction du potentiel appliqué (en kV). Sur cette figure, la courbe 31 correspond à des essais effectués avec un débit spécifique de la phase dispersée de 0,5 $l/hcm^2$, la courbe 32 correspond à un débit spécifique de la phase aqueuse de 1,5 $l/hcm^2$ et la courbe 33 correspond à un débit spécifique de la phase aqueuse de 3 $l/hcm^2$.

Sur la courbe 31, on peut repérer la valeur critique de 5 kV en-dessous de laquelle les étages fonctionnent en coalesceurs avec une hauteur d'unité de transfert qui augmente avec le potentiel appliqué. Au-delà de la valeur critique de 5 kV, la HUT décroît dans des proportions importantes par rapport au fonctionnement sans champ.

Dans le deuxième exemple de fonctionnement du dispositif de l'invention, on n'applique pas la même différence de potentiel aux bornes de tous les étages et ceux-ci fonctionnent soit en disperseur avec

B 8284.3 MDT

une différence de potentiel de 11,25 kV, soit en coalesceur avec une différence de potentiel de 3,75 kV.

La figure 5 illustre les variations de concentrations (en mg/l) du soluté (TBP) dans la phase aqueuse en fonction de la hauteur de la colonne dans les cas suivants :

- courbe 41 : les huit étages sont coalesceurs,

- courbe 42 : les deux premiers étages sont disperseurs et les suivants sont coalesceurs,

- courbe 43 : les quatre premiers étages sont disperseurs et les quatre étages suivants sont coalesceurs,

- courbe 44 : les six premiers étages sont disperseurs et les deux étages suivants sont coalesceurs, et

- courbe 45 : les huit étages sont disperseurs.

Au vu de ces courbes, on remarque que la diminution de concentration dans les étages coalesceurs est faible car la hauteur d'unité de transfert (HUT) y est grande. Elle est au contraire importante dans les étages disperseurs où au contraire la HUT est faible.

La concentration de sortie dépend de la répartition des différences de potentiel le long de la colonne.

A titre comparatif, on a utilisé la même colonne mais sans prévoir de déflecteurs sur les électrodes pour réaliser un lavage du TBP dissous dans une phase aqueuse acide par le même hydrocarbure aromatique, en appliquant une différence de potentiel de 11,25 kV sur tous les étages. Dans ces conditions, pour le débit spécifique aqueux le plus faible, par exemple de 0,5 l/hcm$^2$ la hauteur d'unité de transfert (HUT) est environ 2 fois plus grande et pour le débit spécifique de la phase aqueuse le plus important (par exemple de 1,5 l/hcm$^2$ où le phénomène de ruissellement

B 8284.3 MDT

0173612

sur les électrodes est plus sensible), la HUT est environ trois fois plus grande.

On remarque ainsi que la présence de déflecteurs permet d'améliorer de façon importante le fonctionnement et les performances du dispositif de l'invention.

B 8284.3 MDT

18

0173612

## REVENDICATIONS

1. Dispositif de mise en contact à co-courant ou à contre-courant de deux fluides immiscibles, dont l'un constitue une phase continue et l'autre constitue une phase dispersée sous forme de gouttelettes ou de bulles dans la phase continue, comportant au moins une électrode (11) revêtue d'isolant pour réaliser par application d'un champ électrique le mélange et/ou la séparation des deux phases, caractérisé en ce que le revêtement isolant (22) de ladite électrode est constitué d'au moins deux couches de matériaux différents, la première couche (22b) en contact avec l'électrode étant constituée d'un matériau liquide isolant et la couche externe (22a) étant constituée d'un matériau solide isolant.

2. Dispositif selon la revendication 1, caractérisé en ce que le matériau liquide isolant est choisi dans le groupe comprenant le phénylxylyléthane, les polychlorobiphényles, le benzylnéocaprate et l'huile de transformateur.

3. Dispositif selon l'une quelconque des revendications 1 et 2, caractérisé en ce que le matériau solide isolant est un polymère organique.

4. Dispositif selon la revendication 3, caractérisé en ce que le polymère organique est choisi parmi le polytétrafluoroéthylène, le polyfluorure de vinylidène, le polyéthylène et le polypropylène.

5. Dispositif selon l'une quelconque des revendications 1 à 4, caractérisé en ce que les électrodes (11) ont la forme de barreaux disposés parallèlement au sens de l'écoulement des fluides, et en ce que les barreaux sont munis de déflecteurs (24) empêchant qu'il ne s'établisse un écoulement de la phase dispersée sous la forme de film le long desdits barreaux.

B 8284.3 MDT

6. Dispositif selon la revendication 5, caractérisé en ce que les déflecteurs (24) sont constitués par des couronnes disposées sur lesdits barreaux.

7. Dispositif selon l'une quelconque des revendications 5 et 6, caractérisé en ce que les déflecteurs (24) sont en matériau faiblement mouillable par la phase dispersée.

8. Dispositif selon l'une quelconque des revendications 1 à 7, caractérisé en ce qu'il comprend une pluralité d'électrodes ($11_1$-$11_1'$, $11_2$-$11_2'$,..., $11_n$-$11_n'$) disposées parallèlement au sens de l'écoulement des fluides, ces électrodes déterminant dans la colonne plusieurs étages et étant susceptibles d'être portées à des potentiels différents de façon que le champ électrique puisse varier dans les différents étages de la colonne.

9. Dispositif de mise en contact à contre-courant de deux fluides immiscibles selon l'une quelconque des revendications 1 à 8, caractérisé en ce qu'il comprend un électrocoalesceur (13, 15, 17) placé dans la partie du dispositif située entre l'entrée de la phase dispersée (3) et la sortie de la phase continue (5).

10. Dispositif selon la revendication 9, caractérisé en ce que l'électrocoalesceur (13, 15, 17) comporte au moins deux électrodes dont l'une (13), placée au voisinage de l'entrée de la phase dispersée, est reliée à la terre tandis que l'autre (17) est sous tension.

11. Dispositif selon la revendication 9, caractérisé en ce que l'électrocoalesceur comporte deux électrodes (13, 15) reliées à la terre entourant une électrode (17) sous tension.

12. Dispositif de mise en contact à contre courant de deux fluides immiscibles comportant un dé-

B 8284.3 MDT

canteur de la phase dispersée, caractérisé en ce qu'il comprend des moyens pour créer un champ électrique dans ledit décanteur afin d'accélérer la coalescence des gouttes à l'interface entre les deux phases dans ledit décanteur.

13. Dispositif selon l'une quelconque des revendications 1 à 12, caractérisé en ce qu'il comprend un garnissage.

0173612

FIG.1

FIG.2

FIG.3a

FIG.3b

FIG.3c

FIG.3d

FIG.4

FIG.5

0173612

**RAPPORT DE RECHERCHE EUROPEENNE**

Office européen
des brevets

Numero de la demande

EP 85 40 1548

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | EP-A-0 072 628 (EXXON RESEARCH AND ENGINEERING CO.) * Page 6, lignes 8-32; figures * | 1,12 | B 01 D 11/04 B 01 D 17/06 B 01 F 3/08 |
| | --- | | |
| A | US-A-4 409 078 (J.P. WAGNER et al.) * Figure 3 ; colonn 2, ligne 62 - colonne 3, ligne 9 * | 1,3,4 | |
| | --- | | |
| A | US-A-4 238 304 (ZUCKER) | | |
| | --- | | |
| A | FR-A-2 021 060 (METALLGESELLSCHAFT) | | |
| | ----- | | |

DOMAINES TECHNIQUES RECHERCHES (Int. Cl.4)

B 01 D
B 01 F
B 03 C
C 10 G

Le présent rapport de recherche a été établi pour toutes les revendications

| Lieu de la recherche | Date d'achèvement de la recherche | |
|---|---|---|
| LA HAYE | 29-11-1985 | VAN BELLEGHEM W.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant